# EUROPÄISCHE PATENTSCHRIFT

(11) **EP 1 527 403 B1**
(45) Veröffentlichungstag und Bekanntmachung des Hinweises auf die Patenterteilung: **20.06.2007**
(21) Anmeldenummer: 03787729.7
(22) Anmeldetag: 23.07.2003
(51) Int. Cl.: G06Q 10/00

(54) **WERKZEUG UND VERFAHREN ZUM PROJEKTIEREN, AUSLEGEN ODER PROGRAMMIEREN EINER ANLAGE**
TOOL AND METHOD FOR CONFIGURING, DESIGNING OR PROGRAMMING AN INSTALLATION
OUTIL ET PROCEDE PERMETTANT DE PLANIFIER, DE CONCEVOIR OU DE PROGRAMMER UNE INSTALLATION

(30) Priorität: 05.08.2002 DE 10235517
(43) Veröffentlichungstag der Anmeldung: 04.05.2005
(73) Patentinhaber: SIEMENS AKTIENGESELLSCHAFT, 80333 München (DE)
(72) Erfinder: LIAKOS, Efthimios, 90459 Nürnberg (DE); STEINER, Jochen, 90574 Rosstal (DE); DÖLLING, Peter, 90768 Fürth (DE); URBANGER, Doris, 90537 Feucht (DE)
(86) Internationale Anmeldenummer: PCT/DE2003/002486
(87) Internationale Veröffentlichungsnummer: WO 2004/017147

(56) Entgegenhaltungen:
- WO-A-01/03049
- US-A- 6 092 050

## Beschreibung

Die Erfindung betrifft ein Werkzeug. Dieses kann beispielsweise bei einer Projektierung von Anlagen auf dem Gebiet der Antriebstechnik verwendet werden. Weiterhin betrifft die Erfindung ein Verfahren zum Projektieren einer Anlage sowie ein digitales Speichermedium. Ferner kann ein Werkzeug gemäß der Erfindung auch im Zusammenhang mit der Auslegung oder dem Programmieren einer Anlage verwendet werden.

Im Rahmen eines Projektierungsvorganges ist eine Vielzahl von Teilaufgaben zu bearbeiten, wobei jeder Teilaufgabe Arbeitsschritte zugeordnet sind. Zur Unterstützung des Anwenders ist es bereits bekannt, sogenannte Assistenten oder Wizzards zur Verfügung zu stellen, die dem Anwender eine Bearbeitung seiner Aufgabe erleichtern. Diese Assistenten werden in Form eines Bildschirmfensters auf dem Display des jeweiligen Projektierungswerkzeugs angezeigt und enthalten im allgemeinen Textinformationen, die den Anwender darüber informieren, welche Daten er im Rahmen eines Arbeitsschrittes eingeben muss und in welcher Form diese Dateneingabe zu erfolgen-hat. Ein derartiger Assistent kann aus mehreren Textseiten bestehen, die vom Anwender der Reihe nach aufgerufen werden müssen.

Aus der DE 101 02 205 A1 ist bereits ein Programmierwerkzeug zum Konfigurieren und Verwalten eines Prozesssteuerungsnetzes einschließlich der Nutzung von räumlichen Informationen bekannt. Dieses Programmierwerkzeug ist unter Verwendung einer Programmier-Workstation realisiert, die an ein lokales Datennetz angeschlossen ist. Weiterhin sind mit dem lokalen Datennetz eine Bediener-Workstation, eine Labor-Workstation und Controller/Multiplexer verbunden. Die Controller/Multiplexer wirken als elektrische Schnittstellen zwischen den Workstations und einer Vielzahl von Prozessen. Die Programmier-Workstation umfasst einen Prozessor, ein Display, einen Speicher und Benutzeroberflächen-Einrichtungen wie eine Tastatur, einen Lichtgriffel und dergleichen. Im Speicher ist ein Steuerprogramm abgelegt, das mittels des Prozessors ausgeführt wird, um Operationen und Funktionen der Prozesssteuerungsumgebung zu implementieren. Das Programmierwerkzeug dient dazu, das Prozesssteuerungsnetz zu konfigurieren und sicherzustellen, dass das Prozesssteuerungsnetz mit einem gewünschten Standardprotokoll, beispielsweise dem Fieldbus-Protokoll, übereinstimmt. Dabei werden auf dem Display der Programmier-Workstation Bildschirmpräsentationen angezeigt, die entweder nur die logische Verknüpfung eines Prozesses zeigen oder physische Verbindungen enthalten, die die räumlichen Charakteristiken des Layouts einer Anlage enthalten. Der Bildschirm ist in verschiedene Bereiche aufgeteilt, zu denen unter anderem ein Farbbalkenmenuebereich, ein Piktogrammmenuebereich, ein Schablonenmenuebereich und ein Diagrammbereich gehören. Bei der Konstruktion einer Prozesssteuerungsumgebung unter Anwendung logischer Verknüpfungen aktiviert ein Benutzer eine Schablone aus dem Schablonenmenuebereich und zieht die aktivierte Schablone zu einer gewünschten Stelle innerhalb des Diagrammbereiches.

Aus der EP 1 134 864 A1 sind ein Verfahren und ein graphisches Werkzeug zum Projektieren von Elektroinstallationskomponenten eines Gebäudes bekannt. Dabei wird in einem Bildschirmfenster eine Geräteliste zur Verfügung gestellt, die die zu projektierenden Geräte enthält. Ein zu projektierender Raum wird durch ein eigenes, weiteres Bildschirmfenster dargestellt. Aus der genannten Geräteliste werden dem zu projektierenden Raum Geräte zugeordnet. Die dem Raum zugeordneten Geräte werden in dem dem Raum zugeordneten Bildschirmfenster angezeigt. Anschließend werden unter Verwendung von Assistenten bzw. Wizzards die im Raum-Bildschirmfenster platzierten Geräte graphisch gemäß elektrischer Schaltungen miteinander verschaltet.

Aus der US 6,005,566 ist ein graphisches Benutzerinterface bekannt, bei welchem der Benutzer die Möglichkeit hat, die Art von Information, die zu einem Objekt gehört, zu steuern. Verschiedene Aspekte eines ausgewählten Objekts, bei dem es sich beispielsweise um ein Fahrzeug handelt, werden in verschiedenen Feldern eines Displays angezeigt. Für den Benutzer besteht die Möglichkeit, in Feldern zu navigieren, um einen dort dargestellten Posten auszuwählen.

Die US 2002/0003548 A1 offenbart ein Verfahren zur Steuerung von Netzwerk-Vorrichtungen über eine Benutzerschnittstelle. Dabei wird eine hierarchische Darstellung von Icons aller an das Netzwerk angeschlossenen Vorrichtungen und/oder Services angezeigt. Zusätzlich wird jeder der genannten Icons mit Funktionen einer jeweils zugeordneten Vorrichtung bzw. eines jeweils zugeordneten Service verknüpft.

Aus der WO 01/03049 A1 sind ein Verfahren und eine Vorrichtung zur Präsentation von Projektplanung und computergestütztem Design bekannt. Dabei kommt unter anderem eine Bedieneroberfläche zur Anzeige, die einen Projektplanungsteil, Schaltflächen zur Weiter- und Zurückschaltung sowie einen Designteil aufweist. Im Projektplanungsteil werden die einzelnen Aufgaben eines Projektes in einer baumförmigen Struktur angezeigt.

Die Aufgabe der Erfindung besteht darin, die Anwenderfreundlichkeit eines Werkzeugs zum Projektieren, Anlegen oder Programmieren einer Anlage zu verbessern.

Diese Aufgabe wird durch ein Werkzeug mit den im Anspruch 1 angegebenen Merkmalen gelöst. Vorteilhafte Ausgestaltungen und Weiterbildungen ergeben sich aus den abhängigen Ansprüchen 2 bis 11. Der Anspruch 12 betrifft ein Verfahren zum Projektieren, Auslegen oder Programmieren einer Anlage. Der Anspruch 13 hat ein digitales Speichermedium zum Gegenstand.

Die Vorteile der Erfindung bestehen insbesondere darin, dass dem Anwender zwei verschiedene, unterschiedlich gegliederte Navigationsbereiche gleichzeitig zur Verfügung stehen. Der erste Navigationsbereich eignet sich in besonderem Maße dazu, einen Gesamtüberblick über das vorliegende Projekt bzw. die vorliegende Aufgabe zu gewinnen. Dies ist vor allem dann vorteilhaft, wenn der Anwender nach einer mehr oder weniger langen Unterbrechung seine Arbeit erneut aufnimmt. Ferner bringt dies auch Vorteile für einen Folgebearbeiter, der die Arbeit fortsetzen möchte, und für weitere Personen, die sich einen Überblick über den momentanen Stand der Gesamtaufgabe verschaffen möchten. Der zweite Navigationsbereich eignet sich insbesondere für das Abarbeiten der Aufgabe selbst, da im zweiten Navigationsbereich die zu tätigenden Arbeitsschritte in ihrer Bearbeitungsreihenfolge angezeigt werden. Dies erleichtert es dem Anwender erheblich, die von ihm zu erledigenden Arbeitsschritte in der vorgegebenen Reihenfolge abarbeiten zu können.

Ist der erste Navigationsbereich baumförmig strukturiert, dann gibt dies dem Betrachter des Displays eine besonders gute Übersicht über das vorhandene Projekt.

Enthält der zweite Navigationsbereich auch bildliche bzw. graphische Elemente, beispielsweise eine Darstellung eines Motors und eines Leistungsteiles, dann erleichtert dies insbesondere einem erfahrenen Bearbeiter die Bearbeitung seiner Aufgaben.

Durch die Möglichkeit, die Auswahl eines gewünschten Arbeitsschrittes sowohl im ersten als auch im zweiten Navigationsbereich durchführen zu können, wird den Arbeitsgewohnheiten unterschiedlicher Benutzergruppen Rechnung getragen.

Eine Markierung der dem momentanen Arbeitsschritt zugehörigen Darstellungen in den beiden Navigationsbereichen gemäß dem Anspruch 7 erleichtert den Überblick des Anwenders über den Arbeitsvorgang ebenso wie das Vorsehen der in den Ansprüchen 11 und 12 angegebenen Statusanzeigen.

Weitere vorteilhafte Eigenschaften der Erfindung ergeben sich aus der nachfolgenden Erläuterung eines Ausführungsbeispiels anhand der Figuren. Es zeigt
- Figur 1: eine Blockdarstellung eines Projektierungswerkzeugs gemäß der Erfindung und die
- Figuren 2 - 8: Beispiele für am Display dargestellte graphische Bedienoberflächen.

Die Erfindung betrifft ein Werkzeug, wie es bei allen mittels eines Computers zu bearbeitenden Tätigkeiten, die in Form einer Vielzahl von Teilaufgaben und Arbeitsschritten zu bearbeiten sind, verwendet werden kann. Vorzugsweise handelt es sich bei einem Werkzeug gemäß der Erfindung um ein Projektierungs-, Auslegungs- oder Programmierwerkzeug. Nachfolgend wird die Erfindung beispielhaft anhand eines Projektierungswerkzeugs erläutert.

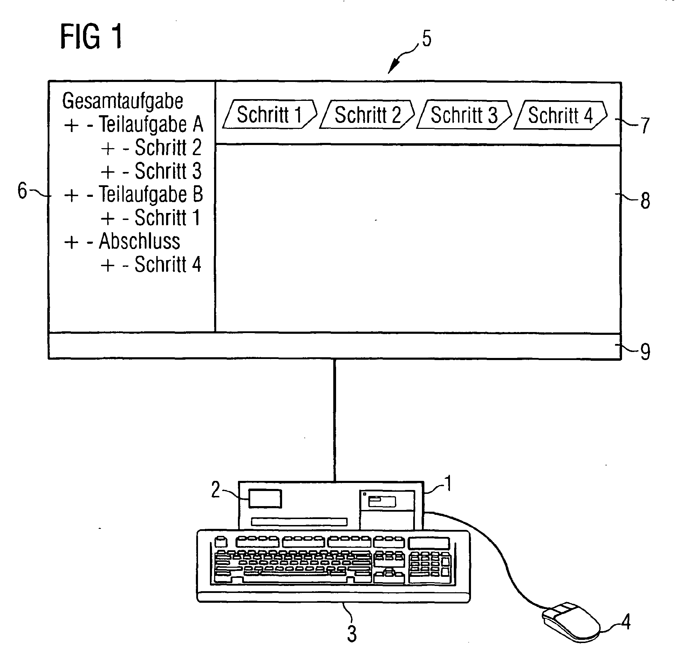

Das in der. Figur 1 gezeigte Projektierungswerkzeug weist einen Computer 1, einen in den Computer eingesetzten Speicher 2, eine Tastatur 3, eine Maus 4 und ein Display 5 auf. Bei dem Speicher 2 handelt es sich vorzugsweise um eine CD-ROM. Auf dieser sind mittels des Computers auslesbare und von ihm umsetzbare Steuersignale und Daten abgespeichert, die mit den weiteren in der FIG dargestellten Bestandteilen des Brojektierungswerkzeugs derart zusammenwirken, dass ein Anwender bei der Bearbeitung eines Projektierungsvorganges unterstützt wird. Die gespeicherten Daten werden in Abhängigkeit vom Fortgang des Projektierungsverfahrens auf dem Display 5 angezeigt, um dem Anwender einen Überblick über das vorhandene Projekt zu geben, ihm Hinweise bezüglich der Reihenfolge der zu bearbeitenden Teilaufgaben und Arbeitsschritte zu geben, ihm. Statusinformationen über den Stand des Projektierungsvorgangs zu liefern, ihm in Abhängigkeit vom momentanen Arbeitsschritt Objekte zur Auswahl anzubieten und ebenfalls in Abhängigkeit vom momentanen Arbeitsschritt allgemeine Hinweise zum momentanen Arbeitsschritt zu geben.

Das Display 5 ist in mehrere Anzeigebereiche aufgeteilt. Der Anzeigebereich 6 ist ein erster Navigationsbereich. In diesem ersten Navigationsbereich sind die einem Projekt zugehörigen Teilaufgaben und Arbeitsschritte hierarchisch gegliedert anzeigbar. Dies geschieht vorzugsweise unter Verwendung einer baumförmigen Struktur, die dem Anwender eine gute Übersicht über das Gesamtprojekt oder - bei großen Projekten - eine gute Übersicht über einen großen Teil des Projektes gibt. Um Platz zu sparen, werden die im baumförmig strukturierten Bereich 6 angezeigten Daten vorzugsweise in alphanumerischer Form, insbesondere in Form von Stichwörtern, angezeigt. Diese gute Übersicht über das Gesamtprojekt ist insbesondere auch dann von Vorteil, wenn der Anwender nach einer Unterbrechung des Projektierungsvorganges seine Arbeit wieder aufnimmt. Er ist durch die Anzeige im ersten Navigationsbereich 6 schnell wieder über den momentanen Stand des Projektierungsvorganges informiert. Die gute Übersicht über das Gesamtprojekt ist auch dann von Vorteil, wenn sich zwei oder mehr Personen die Projektierungsarbeit teilen. Jede dieser Personen wird sofort nach der Aufnahme der Projektierungsarbeit über den momentanen Stand der Projektierungsarbeiten informiert.

Durch ein Navigieren in diesem ersten Navigationsbereich 6 ist auch eine Anwahl eines gewünschten Arbeitsschrittes möglich. Zu diesem Zweck positioniert der Anwender unter Verwendung der Cursorsteuertasten der Tastatur 3 oder unter Verwendung der Maus 4 einen Cursor oder ein anderes Zeigerelement auf der dem gewünschten Schritt entsprechenden alphanumerischen Darstellung und wählt dann diesen Schritt durch Anklicken aus. Die Folge dieser Auswahl ist, dass sich auch die im zweiten Navigationsbereich 7, die im Datenbereich 8 und die im Hinweisfeld 9 angezeigten Daten entsprechend ändern. Insbesondere werden im zweiten Navigationsbereich 7 mehrere aufeinanderfolgende Arbeitsschritte in ihrer Bearbeitungsreihenfolge angezeigt, wobei einer dieser angezeigten Schritte der im ersten Navigationsbereich 6 ausgewählte Schritt ist.

Wurde - wie vorstehend beschrieben - ein gewünschter Arbeitsschritt im ersten Navigationsbereich 6 ausgewählt, dann werden zur Kennzeichnung der getätigten Auswahl der dem ausgewählten Schritt entsprechende Schriftzug oder der Schriftzug der dem ausgewählten Schritt entsprechenden Teilaufgabe im ersten Navigationsbereich 6 sowie der dem ausgewählten Schritt zugehörige Schriftzug und/oder die zugehörige bildliche Darstellung im zweiten Navigationsbereich 7 optisch markiert.

Der Anzeigebereich 7 ist - wie bereits erwähnt - ein zweiter Navigationsbereich. In diesem zweiten Navigationsbereich sind einzelne dem Projekt zugehörige Arbeitsschritte in ihrer Bearbeitungsreihenfolge anzeigbar. Beispielsweise sind in der FIG 1 im zweiten Navigationsbereich 7 insgesamt vier Arbeitsschritte durch graphische und alphanumerische Elemente dargestellt, die im Rahmen des Projektierungsvorganges in der angezeigten Reihenfolge bearbeitet werden müssen. Ist die Bearbeitung mehrerer Schritte abgeschlossen, dann kann unter Verwendung der Cursorsteuertasten der Tastatur 3 oder unter Verwendung der Maus 4 auf jeden der bereits bearbeiteten Schritte zurückgesprungen werden. Dies erfolgt beispielsweise zu dem Zweck, vorher eingegebene bzw. ausgewählte Daten nochmals zu überprüfen. Ein derartiges Navigieren im Anzeigebereich 7 führt auch dazu, dass sich in Abhängigkeit vom momentan ausgewählten Arbeitsschritt die Anzeigen im ersten Navigationsbereich 6, im Datenbereich 8 und im Hinweisfeld 9 verändern.

Im ersten Navigationsbereich 6 wird zur Kennzeichnung der im zweiten Navigationsbereich 7 getätigten Auswahl der dem ausgewählten Schritt entsprechende Schriftzug oder der der momentanen Teilaufgabe entsprechende Schriftzug optisch markiert. Im Datenbereich 8 erfolgt eine Anzeige von dem ausgewählten Schritt zugehörigen Daten. Diese Anzeige erfolgt vorzugsweise in Form einer Tabelle bzw. Liste, wobei jedem Element dieser Liste eine Schaltfläche zugeordnet ist. Wird eine dieser Schaltflächen unter Verwendung der Maus oder Cursorsteuertasten markiert, dann öffnet sich ein Assistent bzw. Wizzard in Form eines Fensters, welches über dem Datenbereich 8 dargestellt wird und entweder weitere Informationen über das ausgewählte Listenelement enthält oder eine Eingabe von das ausgewählte Listenelement betreffenden Angaben anfordert.

Im Hinweisfeld 9 werden in alphanumerischer Form, vorzugsweise in Form kompletter Sätze, allgemeine Hinweise zum Projektierungsvorgang, insbesondere zum momentan ausgewählten Arbeitsschritt oder zur momentan ausgewählten Teilaufgabe, gegeben.

Ist ein ausgewählter Arbeitsschritt abgearbeitet, dann werden die diesem Schritt zugehörigen Darstellungen in beiden Navigationsbereichen 6 und 7 mit einem Erledigungsvermerk versehen, wie sich aus der nachfolgenden Erläuterung der weiteren Figuren ergibt.

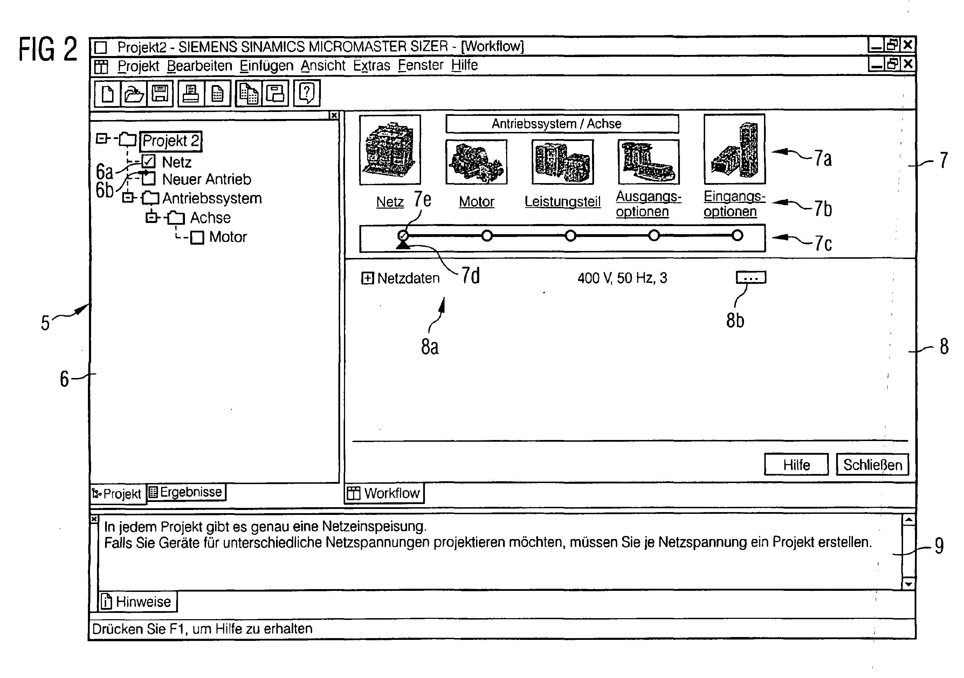

Die Figuren 2 bis 8 zeigen Beispiele für graphische Bedienoberflächen, wie sie in verschiedenen Stadien eines die elektrische Antriebstechnik betreffenden Projektierungsvorganges auf dem Display 5 dargestellt werden. Bei allen diesen Darstellungen sind auf dem Display ein erster Navigationsbereich 6, ein zweiter Navigationsbereich 7 und ein Datenbereich 8 vorgesehen. Weiterhin ist auf dem Display ein Hinweisbereich bzw. Hinweisfeld 9 vorgesehen, in welchem den Projektierungsvorgang betreffende allgemeine Hinweise dargestellt werden. Diese allgemeinen Hinweise beziehen sich insbesondere auf den momentan ausgewählten Arbeitsschritt oder die momentan ausgewählte Teilaufgabe und werden in Form von kompletten Sätzen angezeigt.

Die im ersten Navigationsbereich 6 angezeigten Daten bauen sich im Laufe des Projektierungsvorganges nach und nach zu einer baumförmigen Struktur auf, die dem Anwender einen Überblick über das gesamte Projekt gibt, welches aus mehreren Teilprojekten bestehen kann.

Die im zweiten Navigationsbereich 7 angezeigten Elemente enthalten sowohl alphanumerische Bestandteile 7b als auch graphische Bestandteile 7a. Diese Anzeigeelemente sind einzelnen Arbeitsschritten zugehörig und werden in ihrer Bearbeitungsreihenfolge dargestellt. So ist dem in FIG 2 dargestellten zweiten Navigationsbereich 7 zu entnehmen, dass dort im Rahmen der Projektierung eines neuen Antriebs die Arbeitsschritte Netz, Motor, Leistungsteil, Ausgangsoptionen und Eingangsoptionen abgearbeitet werden müssen. Unterhalb dieser Anzeigeelemente 7a und 7b ist eine Statusanzeige 7c vorgesehen. Diese weist einen horizontalen Balken auf, welcher mehrere kreisförmige Markierelemente enthält, wobei jedes Markierelement einem Arbeitsschritt zugeordnet ist.

Der momentan angewählte Arbeitsschritt wird durch einen dreieckigen Keil 7d markiert, welcher mit seiner Spitze auf das dem angewählten Arbeitsschritt zugehörige kreisförmige Markierelement zeigt. Bei der Darstellung gemäß FIG 2 ist der derzeit angewählte Arbeitsschritt das Netz. Aus dem beispielsweise grünfarbigen Haken 7e im kreisförmigen Markierelement des Arbeitsschrittes Netz ist ersichtlich, dass dieser Arbeitsschritt bereits erledigt ist.

Im Datenbereich 8 werden zum momentan angewählten Arbeitsschritt, also zum Arbeitsschritt Netz, zugehörige Netzdaten angezeigt. Beim gezeigten Ausführungsbeispiel sind dies die Daten "400V, 50Hz, 3". Weiterhin ist den angezeigten Netzdaten eine Schaltfläche 8b zugeordnet. Wird diese angeklickt, dann wird der momentanen Displaydarstellung ein Fenster überlagert, in welchem weitere Informationen zu den Netzdaten angezeigt werden.

Auch die im ersten Navigationsbereich 6 angezeigten Daten sind mit einer Statusanzeige versehen. So ist dort in einem dem momentan angewählten Arbeitsschritt Netz zugehörigen Kästchen ein grünfarbiger Haken 6a angebracht, welcher dem Anwender signalisiert, dass dieser Arbeitsschritt bereits erledigt ist. Der Pfeil 6b in dem dem Schriftzug *"*Neuer Antrieb" zugeordneten Kästchen bedeutet, dass der momentan angewählte Arbeitsschritt zur Projektierung eines neuen Antriebs gehört. Im Hinweisfeld 9 werden die beiden folgenden Sätze angezeigt:

"In jedem Projekt gibt es genau eine Netzeinspeisung. Falls Sie Geräte für unterschiedliche Netzspannungen projektieren möchten, müssen Sie je Netzspannung ein Projekt erstellen."

Diese beiden Sätze geben dem Anwender allgemeine Hinweise zum momentan angewählten Arbeitsschritt.

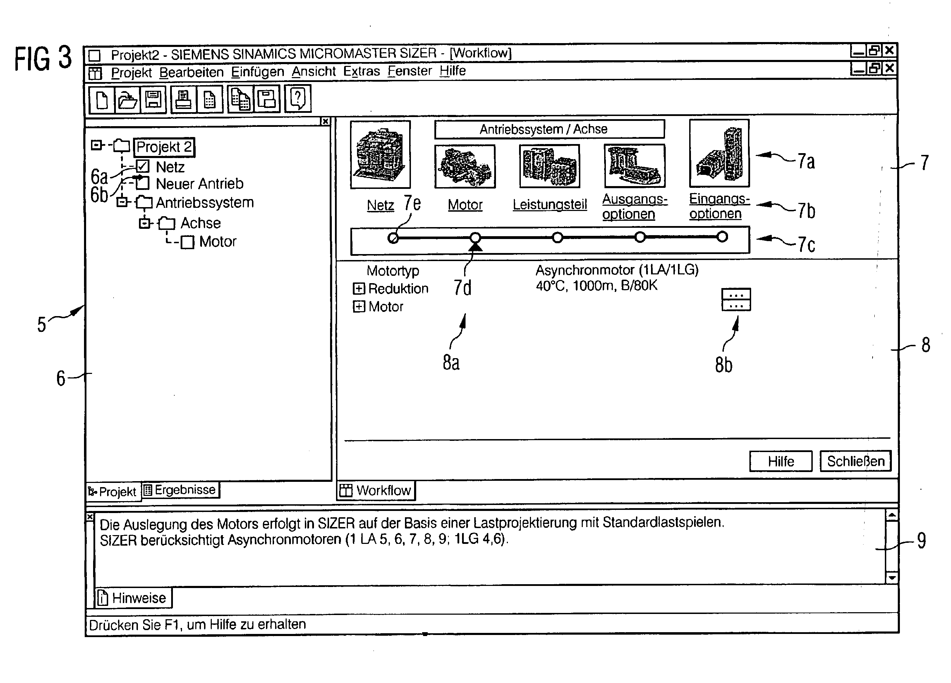

Die FIG 3 zeigt eine Displaydarstellung, wie sie nach dem Anklicken des Wortes "Motor" im ersten Navigationsbereich 6 oder im zweiten Navigationsbereich 7 oder durch Anklicken der graphischen Darstellung des Motors im zweiten Navigationsbereich 7 durch den das Steuerprogramm umsetzenden Computer 1 generiert wird. Die Displaydarstellung gemäß FIG 3 unterscheidet sich von der Displaydarstellung gemäß FIG 2 dadurch, dass der dreieckige Keil 7d nunmehr auf das dem Arbeitsschritt "Motor" zugehörige kreisförmige Markierelement zeigt und dass im Datenbereich 8 in Form einer Liste bzw. Tabelle 8a dem Arbeitsschritt "Motor" zugehörige Daten angezeigt werden, wobei diesen Daten jeweils eine Schaltfläche 8b zugeordnet ist. Weiterhin werden im Hinweisbereich 9 allgemeine Hinweise angezeigt, die die Auswahl des Motors betreffen.

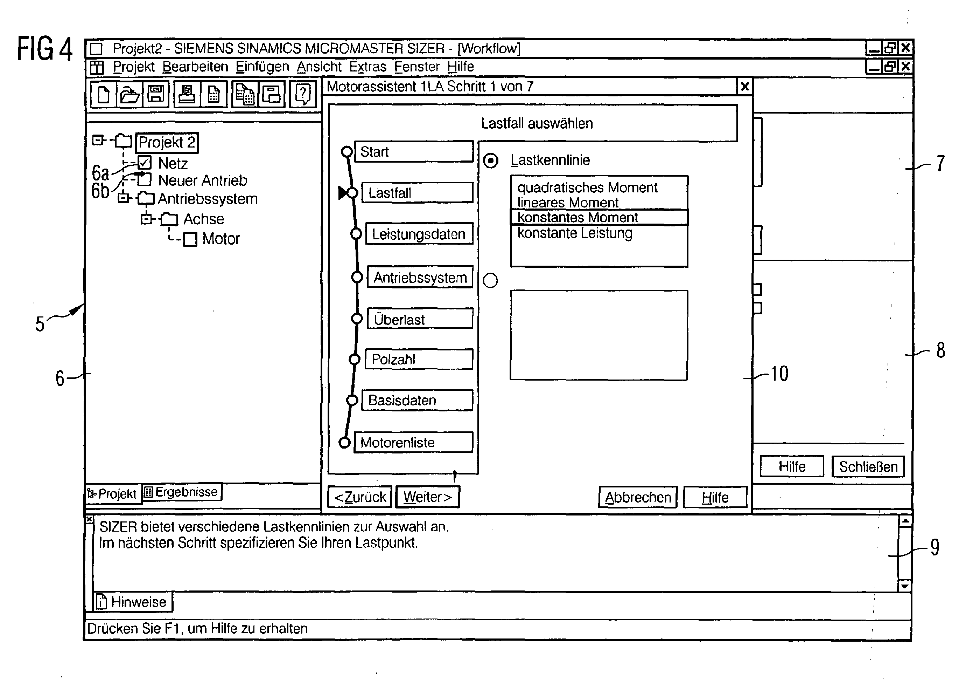

Die FIG 4 zeigt eine der FIG 3 entsprechende Displaydarstellung, auf welcher jedoch - nachdem die Schaltfläche 8b in FIG 3 angeklickt wurde - der Displaydarstellung ein einem Motorassistenten entsprechendes Fenster überlagert ist. Dieses fordert den Anwender zur Eingabe weiterer Daten auf, die die Motorauswahl betreffen. So hat er unter anderem die Lastkennlinie auszuwählen und die Polzahl anzugeben. Im Hinweisfeld 9 werden dem Anwender weitere Informationen gegeben, die die Motorauswahl betreffen.

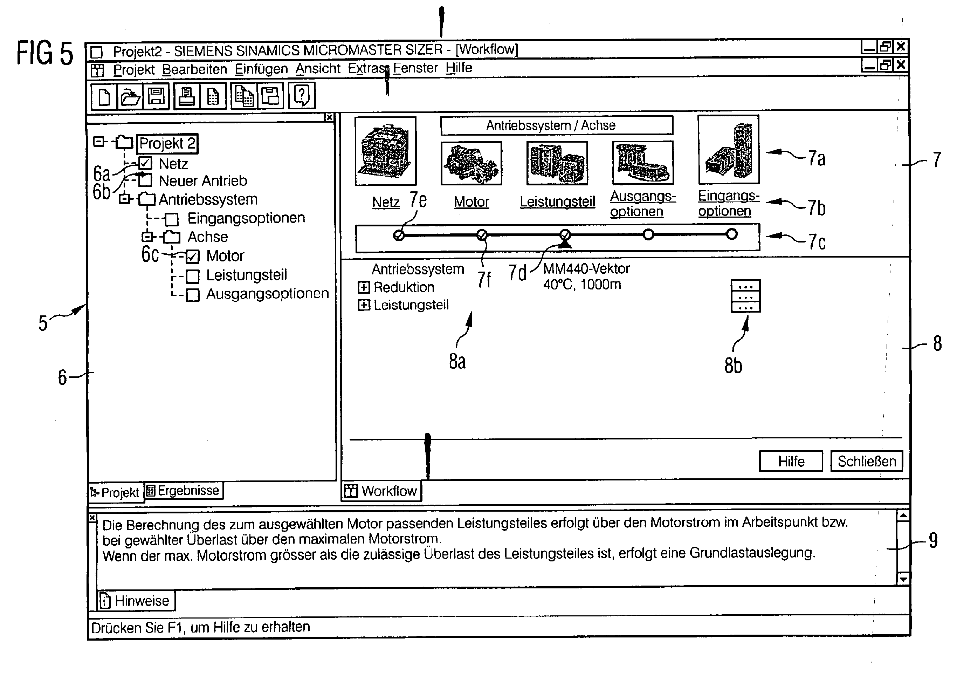

Die FIG 5 zeigt eine Displaydarstellung, wie sie nach dem Anklicken des Wortes "Leistungsteil" im ersten Navigationsbereich 6 oder im zweiten Navigationsbereich 7 oder durch Anklicken der graphischen Darstellung des Leistungsteils im zweiten Navigationsbereich 7 durch den das Steuerprogramm umsetzenden Computer 1 generiert wird. Die Displaydarstellung gemäß FIG 5 unterscheidet sich von der Displaydarstellung gemäß FIG 3 dadurch, dass der dreieckförmige Keil 7d nunmehr auf das dem Arbeitsschritt "Leistungsteil" zugehörige kreisförmige Markierelement zeigt und dass im Datenbereich 8 in Form einer Liste bzw. Tabelle 8a dem Arbeitsschritt "Leistungsteil" zugehörige Daten angezeigt werden, wobei diesen Daten jeweils eine Schaltfläche 8b zugeordnet ist. Weiterhin werden im Hinweisfeld 9 allgemeine Hinweise angezeigt, die die Auswahl des Leistungsteils betreffen. Ferner sind als Kennzeichnung dafür, dass der Arbeitsschritt "Motor" bereits abgearbeitet ist, in dem dem Schriftzug "Motor" zugehörigen Kästchen im ersten Navigationsbereich 6 ein grünfarbiger Haken 6c und in dem dem Schriftzug "Motor" zugehörigen kreisförmigen Markierelement im zweiten Navigationsbereich 7 ein grünfarbiger Haken 7f angebracht. Ferner ist aus der Darstellung des ersten Navigationsbereiches 6 ersichtlich, dass sich die baumförmige Struktur im Laufe des Projektierungsvorganges nach und nach weiter aufbaut.

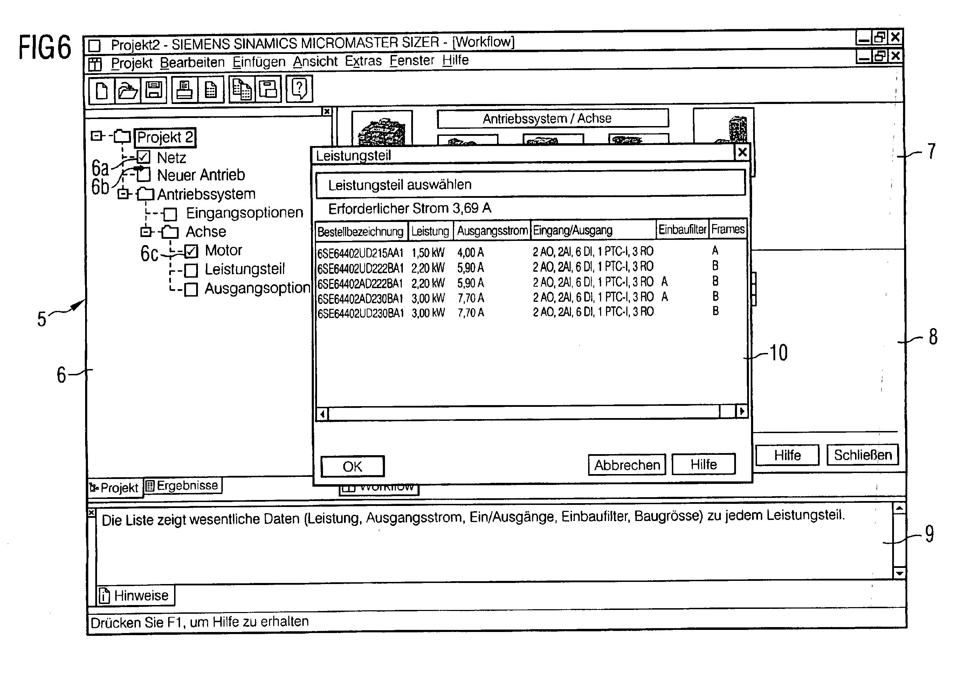

Wird in der Displaydarstellung gemäß FIG 5 die dem Leistungsteil zugehörige Schaltfläche 8b angeklickt, dann generiert der Computer 1 in Umsetzung des im Speicher 2 abgespeicherten Steuerprogrammes eine Displaydarstellung gemäß FIG 6. Diese weist ein der weiteren Displaydarstellung überlagertes Fenster 10 auf, in welchen der Anwender zur Auswahl des Leistungsteiles aufgefordert wird. Weiterhin werden dem Anwender in diesem Fenster verschiedene Leistungsteile zur Auswahl angeboten. Im Hinweisfeld 9 werden dem Anwender weitere Informationen gegeben, die die Auswahl des Leistungsteils betreffen.

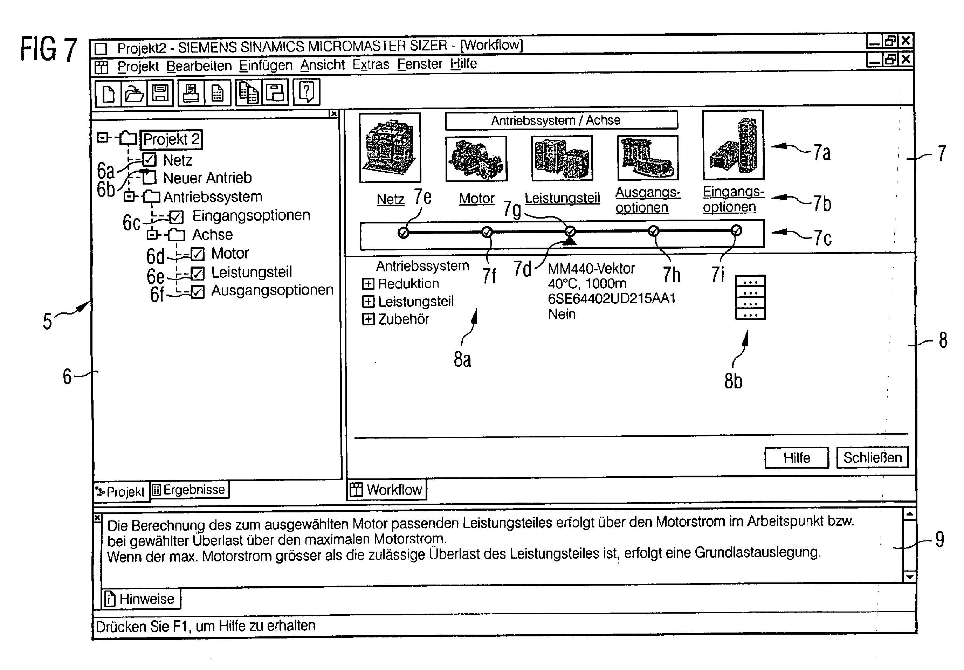

Die FIG 7 zeigt eine Displaydarstellung, wie sie nach erfolgter Fertigstellung der Projektierung eines neuen Antriebssystems angezeigt wird, wenn ein Anklicken des Leistungsteils erfolgt ist. Das Anklicken des Leistungsteils ist durch die Positionierung des dreieckigen Keils 7d an dem dem Arbeitsschritt "Leistungsteil" zugehörigen kreisförmigen Markierelement veranschaulicht. Die grünfarbigen Haken 7e, 7f, 7g, 7h und 7i zeigen, dass alle Arbeitsschritte bezüglich dieses Antriebssystems bereits erledigt sind. Das Abarbeiten aller Arbeitsschritte bezüglich des angewählten Antriebssystems wird weiterhin auch durch die ebenfalls grünfarbigen Haken 6a, 6b, 6c, 6d, 6e und 6f im ersten Navigationsbereich 6 angezeigt.

Eine Ausgestaltung der Erfindung besteht darin, dass dann, wenn im Rahmen der Projektierung in einem Arbeitsschritt beispielsweise ein Leistungsteil ausgewählt wird, das nicht kompatibel ist mit bereits in vorherigen Arbeitsschritten ausgewählten Bauteilen, beispielsweise dem Versorgungsnetz oder einem bestimmten Motor, durch eine Darstellung roter Haken alle nicht kompatiblen Bauteile gekennzeichnet werden, so dass der Anwender andere, zueinander kompatible Bauteile auswählen kann.

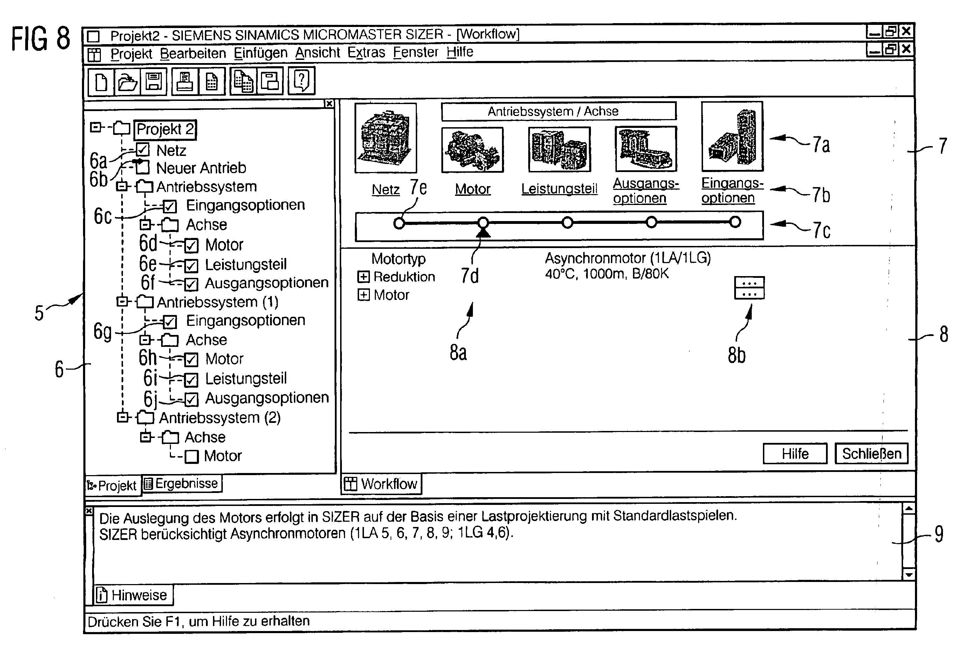

Die FIG 8 zeigt eine Displaydarstellung, in welcher aus dem ersten Navigationsbereich 6 ersichtlich ist, dass dem zu projektierenden Gesamtprojekt mehrere Teilprojekte angehören. Diese tragen die Bezeichnungen "Antriebssystem", "Antriebssystem 1" und "Antriebssystem 2". Die Teilprojekte "Antriebssystem" und "Antriebssystem 1" sind bereits vollständig projektiert, wie aus den Haken 6a, ..., 6j im ersten Navigationsbereich 6 ersichtlich ist. Durch den dreieckigen Keil 7d im zweiten Navigationsbereich 7, welcher an dem dem Motor zugehörigen kreisförmigen Markierelement positioniert ist, wird angezeigt, dass der aktuell angewählte Arbeitsschritt der Arbeitsschritt "Motor*"* ist. In diesem Arbeitsschritt wird der dem Antriebssystem 2 zugehörige Motor ausgewählt. Diese Auswahl eines geeigneten Motors wird dem Anwender durch die im Datenbereich 8 angezeigte Tabelle 8a erleichtert. Weitere Informationen über auswählbare Motoren erhält der Anwender durch Anklicken der Schaltfläche 8b und durch die Hinweise im Hinweisbereich 9.

Folglich setzt der Rechner 1 das im Speicher 2 abgelegte Steuerprogramm, welchem auch Auswahllisten und Dialogtexte zugehörig sind, in auf dem Display 5 anzeigbare Displaydarstellungen um. Diese weisen jeweils zwei Navigationsbereiche 6, 7 und einen Datenbereich 8 auf. Die beiden Navigationsbereiche sind unterschiedlich gegliedert. Der erste Navigationsbereich 6 gibt eine gute Übersicht über das Gesamtprojekt oder zumindest einen Großteil desselben. Durch eine Auswahl eines gewünschten Arbeitsschrittes durch Navigieren im ersten Navigationsbereich 6 werden auch die Informationsinhalte im zweiten Navigationsbereich 7 und im Datenbereich 8 an die getätigte Auswahl angepasst. Im zweiten Navigationsbereich 7 werden einzelne Arbeitsschritte in ihrer Bearbeitungsreihenfolge angezeigt. Dies ist insbesondere in der Projektierungsphase selbst von Vorteil. Vorzugsweise erhält der Anwender zusätzlich Informationen zum momentan ausgewählten Arbeitsschritt in einem Hinweisbereich 9 des Displays 5, welches zusätzlich zu den Navigationsbereichen 6 und 7 und dem Datenbereich 8 vorgesehen ist. Alternativ zur Auswahl eines gewünschten Arbeitsschrittes durch Navigieren und Anklicken im ersten Navigationsbereich 6 kann der gewünschte Arbeitsschritt auch durch Navigieren und Anklicken im zweiten Navigationsbereich 7 angewählt werden. Auch nach einer derartigen Auswahl werden die Informationsinhalte im ersten Navigationsbereich 6 und im Datenbereich 8 angepasst.

Der zweite Navigationsbereich 7 gliedert sich in einzelne Befehlselemente. Ein Befehlselement bildet dabei einen vom Anwender durchzuführenden Arbeitsschritt ab. Die Gesamtheit dieser Befehlselemente in der Reihenfolge, wie sie vom Anwender beim Projektierungsvorgang zu beachten ist, bildet den zweiten Navigationsbereich, der auch als Workflow-Navigationsbereich bezeichnet wird. Jedes dieser Befehlselemente kann angewählt werden und zeigt dann dem Anwender im Datenbereich die zum jeweiligen Arbeitsschritt gehörigen Daten an oder gibt dem Anwender die Möglichkeit Daten einzugeben oder zu verändern. Dieser Workflow-Navigationsbereich 7 wird von links nach rechts abgearbeitet und gibt bei der erstmaligen Abarbeitung eine Reihenfolge vor. Nach Abarbeitung aller Arbeitsschritte, die vom Anwender mit Hilfe der genannten Befehlselemente der Reihe nach angewählt werden, ist die Gesamtaufgabe gelöst bzw. der Projektierungsvorgang abgeschlossen.

Eine zusätzliche Unterstützung des Anwenders kann durch das Vorsehen von Schaltflächen "WEITER" und "ZURÜCK" erzielt werden. Dadurch werden insbesondere Anfänger bzw. Erstanwender optimal geführt.

Sind Änderungen in bereits projektierte Projekte einzubringen, so kann der gewünschte Arbeitsschritt unter Verwendung dieser Schaltflächen "WEITER" und "ZURÜCK" oder durch eine direkte Auswahl im zweiten Navigationsbereich 7 angewählt werden.

Der vorstehend beschriebene zweite Navigationsbereich 7 bzw. Workflow-Navigationsbereich wird durch den baumförmig strukturierten ersten Navigationsbereich 6 ergänzt. Dieser zeigt dem Anwender eine hierarchische Struktur seiner Arbeitsschritte bzw. der zu bearbeitenden Elemente und erleichtert dadurch ein strukturiertes Suchen. Der baumförmig strukturierte erste Navigationsbereich 6 gibt einen guten Überblick über die gesamte Projektierungsaufgabe. Dies ist insbesondere hilfreich bei neuen Gesamtaufgaben und nach längeren Arbeitsunterbrechungen und auch dann, wenn ein anderer Anwender eine begonnene Gesamtaufgabe fortsetzen will.

In beiden Navigationsbereichen erfolgt eine Markierung des gegenwärtig angewählten Arbeitsschrittes. Beginnt der Anwender im zweiten Navigationsbereich 7 zu navigieren, dann wird auch die Markierung im ersten Navigationsbereich entsprechend verschoben. Dadurch lernt der Anwender die hierarchische Struktur kennen und findet sich auch dort leicht zurecht. Ein Wechsel zwischen den beiden Navigationsbereichen 6 und 7 ist jederzeit möglich.

Die in beiden Navigationsbereichen erfolgenden Statusanzeigen zeigen dem Anwender an, ob Arbeitsschritte bereits erledigt sind oder nicht. Zusätzlich kann angezeigt werden, ob Arbeitsschritte gegebenenfalls nochmals überprüft oder ungültig geworden sind. In der hierarchischen Ansicht können Sammel-Statusinformationen für ganze Hierarchiebäume zusätzliche Statusinformation an den Anwender weitergeben. Diese Statusinformationen ermöglichen es, auch bei einem Wechsel des Bearbeiters, sich schnell einen Überblich über den Fortgang der Gesamtaufgabe zu verschaffen.

Es besteht jederzeit die Möglichkeit, die Projektierungsarbeit zu unterbrechen und zu einem beliebigen späteren Zeitpunkt fortzusetzen. Weiterhin wird der Anwender beim Abarbeiten seiner Aufgabe durch die Vorgabe der Reihenfolge der Arbeitsschritte gut unterstützt. Bei eventuellen späteren Änderungen ist er jedoch nicht an diese Reihenfolge gebunden.

Eine vorteilhafte Weiterbildung der Erfindung besteht darin, für den Anwender beim Anbieten einer Auswahlliste nur diejenigen Listenelemente anklickbar bzw. auswählbar zu machen, die mit bereits vorher ausgewählten Elementen bzw. Geräten kompatibel sind.

## Patentansprüche

1. Projektierungs-, Auslegungs- oder Programmierungswerkzeug mit
- einem Speicher (2) zur Abspeicherung eines Steuerprogrammes,
- einer Bedieneinheit (3, 4) zur Eingabe von Bedienbefehlen,
- einem Computer (1) und
- einem Display (5) zur Anzeige einer graphischen Bedienoberfläche, welche einen Navigationsbereich (6) und einen Datenbereich (8) aufweist, wobei
- der erste Navigationsbereich (6) ein Bereich ist, in welchem die einem Projekt zugehörigen Teilaufgaben und Arbeitsschritte hierarchisch gegliedert anzeigbar sind,
**dadurch gekennzeichnet, dass**
- die graphische Bedienoberfläche mindestens zwei unterschiedlich gegliederte Navigationsbereiche (6, 7) aufweist,
- der zweite Navigationsbereich (7) ein Bereich ist, in welchem einzelne, dem Projekt zugehörige Arbeitsschritte in ihrer Bearbeitungsreihenfolge anzeigbar sind, und
- eine Anwahl eines gewünschten Arbeitsschrittes sowohl im ersten Navigationsbereich (6) als auch im zweiten Navigationsbereich (7) durchführbar ist.

2. Werkzeug nach Anspruch 1, **dadurch gekennzeichnet, dass** der erste Navigationsbereich (6) ein baumförmig strukturierter Bereich ist.

3. Werkzeug nach Anspruch 1 oder 2, **dadurch gekennzeichnet, dass** der erste Navigationsbereich (6) eine baumförmig strukturierte Übersicht über das Projekt gibt.

4. Werkzeug nach einem der vorhergehenden Ansprüche, **dadurch gekennzeichnet, dass** die im ersten Navigationsbereich (6) angezeigten Elemente jeweils in Form einer alphanumerischen Darstellung angezeigt werden.

5. Werkzeug nach einem der vorhergehenden Ansprüche, **dadurch gekennzeichnet, dass** die im zweiten Navigationsbereich (7) angezeigten Elemente jeweils in alphanumerischer und graphischer Form angezeigt werden.

6. Werkzeug nach einem der vorhergehenden Ansprüche, **dadurch gekennzeichnet, dass** nach erfolgter Anwahl des gewünschten Arbeitsschrittes diesem Arbeitsschritt zugehörige Daten im Datenbereich (8) angezeigt werden.

7. Werkzeug nach einem der vorhergehenden Ansprüche, **dadurch gekennzeichnet, dass** nach erfolgter Anwahl des gewünschten Arbeitsschrittes die dem angewählten Arbeitsschritt entsprechende alphanumerische Darstellung im ersten Navigationsbereich (6) und die dem angewählten Arbeitsschritt entsprechende alphanumerische und graphische Darstellung im zweiten Navigationsbereich (7) optisch markiert wird.

8. Werkzeug nach einem der Ansprüche 5 - 7, **dadurch gekennzeichnet, dass** die im Datenbereich (8) angezeigten Daten in Form einer Liste (8a) angezeigt werden, welche auswählbare Listenelemente enthält.

9. Werkzeug nach Anspruch 8, **dadurch gekennzeichnet, dass** jedem auswählbarem Listenelement eine Schaltfläche (8b) zugeordnet ist, bei deren Anklicken der momentanen Displaydarstellung ein einem Assistenten entsprechendes Fenster (10) überlagert wird, welches Hilfsinformationen enthält oder eine Eingabe von Parametern anfordert.

10. Werkzeug nach einem der vorhergehenden Ansprüche, **dadurch gekennzeichnet, dass** in den Navigationsbereichen (6, 7) jeweils Statusanzeigen (6a - 6j, 7c - 7i) vorgesehen sind, welche jeweils Informationen darüber enthalten, ob ein Arbeitsschritt bereits erledigt ist oder nicht.

11. Werkzeug nach Anspruch 10, **dadurch gekennzeichnet, dass** die Statusanzeigen weiterhin Informationen darüber enthalten, ob die in einem Arbeitsschritt erfolgte Datenauswahl zu einem unzulässigen Zustand geführt hat oder nicht.

12. Verfahren zum Projektieren, Auslegen oder Programmieren einer Anlage, bei welchem
- auf einem Display eine graphische Bedienoberfläche angezeigt wird, welche mindestens zwei unterschiedlich gegliederte Navigationsbereiche (6,7) und einen Datenbereich (8) aufweist, wobei der erste Navigationsbereich (6) ein Bereich ist, in welchem die einem Projekt zugehörigen Teilaufgaben und Arbeitsschritte hierarchisch gegliedert anzeigbar sind und der zweite Navigationsbereich (7) ein Bereich ist, in dem einzelne der Arbeitsschritte in ihrer Bearbeitungsreihenfolge angezeigt werden,
- durch ein Navigieren im ersten oder im zweiten Navigationsbereich ein gewünschter Arbeitsschritt angewählt wird,
- die dem angewählten Arbeitsschritt zugehörigen Anzeigeelemente im ersten und im zweiten Navigationsbereich optisch markiert werden und
- im Datenbereich (8) dem angewählten Arbeitsschritt zugehörige Daten angezeigt werden.

13. Digitales Speichermedium, insbesondere CD-ROM, mit einem abgespeicherten Steuerprogramm, welches mit einem Computer, einer Bedieneinheit und einem Display derart zusammenwirkt, dass ein Verfahren nach Anspruch 12 ausgeführt wird.

## Claims

1. Configuration, design or programming tool with
- a storage unit (2) for storing a control program,
- an operator unit (3, 4) for inputting operator commands,
- a computer (1) and
- a display (5) for displaying a graphic operator interface having a navigation area (6) and a data area (8), in which
- the first navigation area (6) is an area, in which the sub-tasks and work steps associated with a project can be displayed in a hierarchically organised manner,
**characterised in that**
- the graphic user interface has at least two disparately organised navigation areas (6, 7),
- the second navigation area (7) is an area, in which individual work steps associated with the project can be displayed in their processing sequence, and
- a required work step can be selected both in the first navigation area (6) and in the second navigation area (7).

2. Tool according to claim 1,
**characterised in that** the first navigation area (6) is an area with a tree structure.

3. Tool according to claim 1 or 2,
**characterised in that** the first navigation area (6) provides an overview of the project with a tree structure.

4. Tool according to one of the preceding claims,
**characterised in that** the elements displayed in the first navigation area (6) are each displayed in the form of an alphanumeric display.

5. Tool according to one of the preceding claims,
**characterised in that** the elements displayed in the second navigation area (7) are each displayed in alphanumeric and graphic form.

6. Tool according to one of the preceding claims,
**characterised in that** once the required work step has been selected, data associated with said work step is displayed in the data area (8).

7. Tool according to one of the preceding claims,
**characterised in that** once the required work step has been selected, the alphanumeric display in the first navigation area (6) corresponding to the selected work step and the alphanumeric and graphic display in the second navigation area (7) corresponding to the selected work step are visually marked.

8. Tool according to one of claims 5 - 7,
**characterised in that** the data displayed in the data area (8) is displayed in the form of a list (8a) containing selectable list elements.

9. Tool according to claim 8,
**characterised in that** a button (8b) is assigned to each selectable list element, which can be clicked on to superimpose a window (10) corresponding to an assistant on the current display, said window containing help information or prompting the inputting of parameters.

10. Tool according to one of the preceding claims,
**characterised in that** status indicators (6a - 6j, 7c - 7i) are provided in each of the navigation areas (6, 7) containing information about whether or not a work step has already been completed.

11. Tool according to claim 10,
**characterised in that** the status indicators also contain information about whether or not the data selection made in a work step has resulted in a non-permitted status.

12. Method for configuring, designing or programming an installation in which
- a graphic operator interface is displayed on a display, having at least two disparately organised navigation areas (6, 7) and a data area (8), the first navigation area (6) being an area in which the sub-tasks and work steps associated with a project can be displayed in a hierarchically organised manner and the second navigation area (7) being an area in which individual work steps are displayed in their processing sequence,
- a required work step is selected by navigating in the first or in the second navigation area,
- the display elements associated with the selected work step are visually marked in the first and in the second navigation area and
- data associated with the selected work step is displayed in the data area (8).

13. Digital storage medium, in particular a CD-ROM, with a stored control program, which interacts with a computer, an operator unit and a display such that a method according to Claim 12 is executed.

## Revendications

1. Outil de planification, de conception ou de programmation comprenant
- une mémoire (2) pour le stockage d'un programme de commande,
- une unité de commande (3, 4) pour l'entrée d'instructions de commande,
- un ordinateur (1) et
- un écran (5) pour l'affichage d'une interface utilisateur graphique, qui présente une zone de navigation (6) et une zone de données (8),
- la première zone de navigation (6) étant une zone dans laquelle les tâches partielles et étapes de travail spécifiques à un projet peuvent être représentées de manière hiérarchiquement structurée,
**caractérisé en ce que**
- l'interface utilisateur graphique présente au moins deux zones de navigation (6, 7) structurées différemment,
- la seconde zone de navigation (7) est une zone dans laquelle des étapes de travail individuelles et spécifiques au projet peuvent être affichées dans leur ordre de succession de traitement et
- un choix d'une étape de travail souhaitée peut être effectué aussi bien dans la première zone de navigation (6) que dans la seconde zone de navigation (7).

2. Outil selon la revendication 1, **caractérisé en ce que** la première zone de navigation (6) est une zone structurée en forme d'arbre.

3. Outil selon la revendication 1 ou 2, **caractérisé en ce que** la première zone de navigation (6) donne un aperçu structuré en forme d'arbre du projet.

4. Outil selon l'une quelconque des revendications précédentes, **caractérisé en ce que** les éléments affichés dans la première zone de navigation (6) sont à chaque fois sous la forme d'une représentation alphanumérique.

5. Outil selon l'une quelconque des revendications précédentes, **caractérisé en ce que** les éléments affichés dans la seconde zone de navigation (7) sont affichés à chaque fois sous une forme alphanumérique et sous une forme graphique.

6. Outil selon l'une quelconque des revendications précédentes, **caractérisé en ce que**, après le choix de l'étape de travail souhaitée, des données spécifiques à cette étape de travail sont affichées dans la zone de données (8).

7. Outil selon l'une quelconque des revendications précédentes, **caractérisé en ce que**, après le choix de l'étape de travail souhaitée, la représentation alphanumérique correspondant à l'étape de travail choisie est marquée visuellement dans la première zone de navigation (6) et la représentation alphanumérique et graphique, correspondant à l'étape de travail choisie, est marquée visuellement dans la seconde zone de navigation (7).

8. Outil selon l'une quelconque des revendications précédentes 5 à 7, **caractérisé en ce que** les données affichées dans la zone de données (8) sont affichées sous la forme d'une liste (8a) qui contient des éléments de liste pouvant être choisis.

9. Outil selon la revendication 8, **caractérisé en ce qu'**à chaque élément de liste pouvant être choisi est attribuée une icône (8b), **en ce que**, lorsqu'on clique sur cette icône, une fenêtre (10) correspondant à un assistant est superposée à la représentation d'écran momentanée, laquelle fenêtre contient des informations d'aide ou demande une entrée de paramètres.

10. Outil selon l'une quelconque des revendications précédentes, **caractérisé en ce que** dans les zones de navigation (6, 7) sont prévus à chaque fois des affichages d'état (6a - 6j, 7c - 7i) qui contiennent à chaque fois des informations sur le fait qu'une étape de travail est déjà exécutée ou non.

11. Outil selon la revendication 10, **caractérisé en ce que** les affichages d'état contiennent également des informations sur le fait que le choix de données effectué dans une étape de travail a abouti ou non à un état non autorisé.

12. Procédé pour la planification, la conception ou la programmation d'une installation, dans lequel
- une interface utilisateur graphique est affichée sur un écran, laquelle présente au moins deux zones de navigation (6, 7) de structures différentes et une zone de données (8), la première zone de navigation (6) étant une zone dans laquelle les tâches partielles et les étapes de travail spécifiques à un projet peuvent être affichées de manière hiérarchiquement structurée et la seconde zone de navigation (7) est une zone dans laquelle certaines des étapes de travail sont affichées dans leur ordre de succession de traitement,
- une étape de travail souhaitée est choisie par une navigation dans la première ou dans la seconde zone de navigation,
- les éléments d'affichage spécifiques à l'étape de travail choisie sont marqués visuellement dans la première et dans la seconde zone de navigation, et
- des données spécifiques à l'étape de travail choisie sont affichées dans la zone de données (8).

13. Support de stockage numérique, en particulier CD-ROM, comprenant un programme de commande mémorisé, qui coopère avec un ordinateur, une unité de commande et un écran, de telle sorte qu'un procédé selon la revendication 12 est mis en oeuvre.
